Europäisches Patentamt

European Patent Office

Office européen des brevets

Veröffentlichungsnummer: **0 285 062**
**A2**

# EUROPÄISCHE PATENTANMELDUNG

Anmeldenummer: **88104972.0**

Anmeldetag: **28.03.88**

Int. Cl.⁴ **F16H 1/44 , B60K 17/35**

Priorität: **01.04.87 IT 6600387**

Veröffentlichungstag der Anmeldung:
**05.10.88 Patentblatt 88/40**

Benannte Vertragsstaaten:
**AT BE CH DE ES FR GB GR IT LI LU NL SE**

Anmelder: **CO.B.R.A. S.N.C. DI BRUSEGHINI ERIO & C.**
**Via Stazione, 12**
**I-23026 Ponte in Valtellina (Sondrio)(IT)**

Erfinder: **Bruseghini, Giorgio**
**Via Mazzini, 6**
**I-23100 Sondrio(IT)**

Vertreter: **Jaumann, Paolo**
**Studio Consulenza Brevetti Jaumann Piazza Castello, 2**
**I-20121-Milano(IT)**

Untersetzer-Verteilergetriebe für 4-Rad-Antrieb für Kraftfahrzeuge.

Die Erfindung betrifft ein Untersetzer-Verteilergetriebe für 4-Rad-Antrieb für Kraftfahrzeuge, mit Krafteingangswelle (1), hinterer Kraftausgangswelle (3), Zwischenwelle (4), innerer Kraftausganswelle (5) und vorderer Kraftausgangswelle (7), wobei zwischen der inneren Kraftausgangswelle (5) un der vorderern Kraftausgangswelle (4) ein Differentialgetriebe (6) gleichachsig angeordnet ist. Das Differentialgetriebe (6) hat ein dicht verschlossenes, mit einer chemichen Verbindungen gefülltes Gehäuse, sodass bei nachlassender Bodenhaftung der Hinterräder ein Teil ( ca. 20 % ) der normalerweise nur auf die Hinterräder übertragenen Antriebskraft über das Differential selbsttätig auf die vordere Kraftausgangswelle (4) übertragen wird.

Mittels einer Schiebehülse (8) kann vordere Kraftausgangswelle (7) fest mit dem Differentialgehäuse verbunden werden, sodass die gesamte Antriebskraft zu gleichen Teilen auf die Hinter-und Vorderradachsen übertragen wird.

Fig. 1

EP 0 285 062 A2

"Untersetzer-Verteilergebtriebe für 4-Rad-Antrieb für Kraftfahrzeuge"

Die Erfindung betrifft ein Untersetzer-Verteilergetriebe für Kraftfahrzeuge mit 4-Rad-Antrieb, mit dem im Normalbetrieb 100 % der Antriebskraft auf die Hinterradachse übertragen wird und mit dem bei nachlassender Bodenhaftung der Hinterräder ein Teil -ca. 18-22 % - der Antriebskraft selbstätig auf die Vorderradachse übertragen wird. Dies wird durch ein auf der Ausgangswelle für die Vorderradachse angeordnetes Differentialgetriebe erreicht. Auf dieser Ausgangswelle ist eine Schiebehülse angebracht, durch deren Verschiebung diese Welle in feste Verbindung mit dem Differentialgehäuse gebracht werden kann, sodass ein voller Antrieb auch der Vorderradachse erfolgt. Die Gesamtantiebskraft wird dann auf die Hinterrad-und die Vorderradachse zu gleichen Teilen übertragen.

Ein Ausführungsbeispiel des Erfindungsgegenstanden ist nachstehend mit Bezug auf die Zeichnungen mit weiteren Details beschrieben. Es Zeigen :

Fig. 1 das Übertragungsgetriebe im Schnitt,

Fig. 2 der Verlauf der normalen Kraftübertragung 1:1,

Fig. 3 der Verlauf der reduzierten Kraftübertragung 1:2.

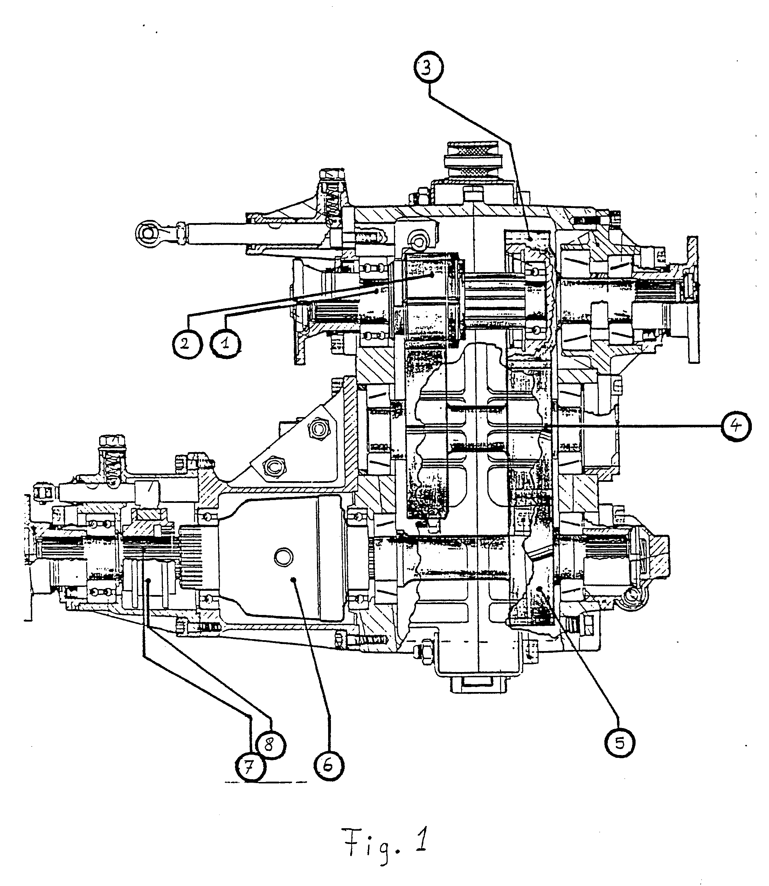

Aus Fig. 1 sind die folgenden wichtigates komponenten des Übertragungsgetriebes gemäss der Erfindung zu entnemehn :

Krafteingangswelle 1 mit achsial verschiebbaren Zahnrad 2, Hintere Kraftausgangswelle 3,

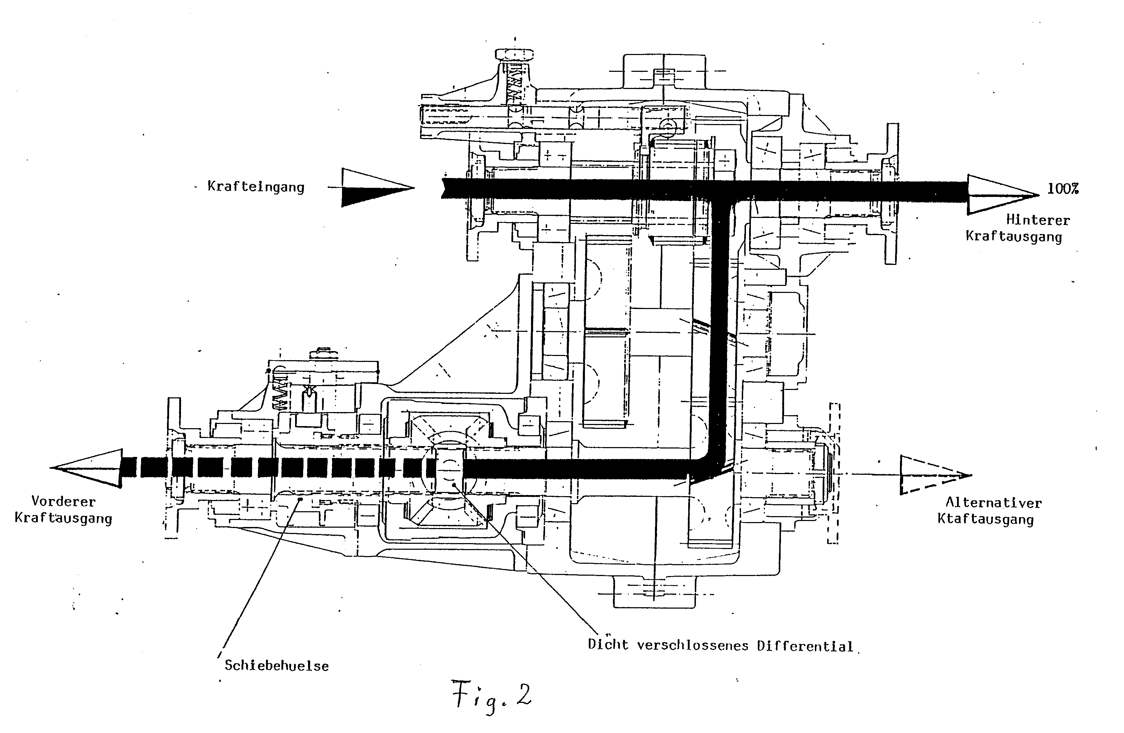

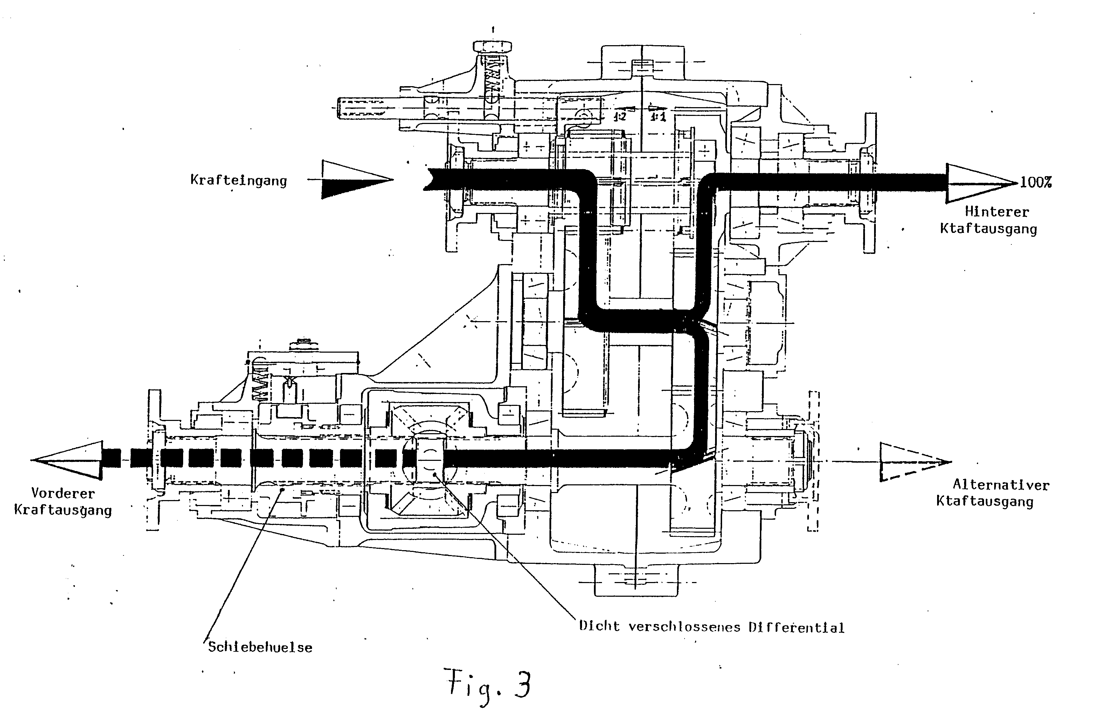

Verschiebbares Zahnrad 2 zur Umschaltung vom normalen Übertragungsverhälnis 1:1 (Fig.2) auf reduziertes Übertragungsverhältnis 1:2; Zwischenwelle 4 mit Übertragungsrädern mit geraden Zähnen für das Übertragungsverhältnis 1:2(Fig.3)- und mit Übertragungsrädern mit schrägen Zähnen für das Übertragungsverhältnis 1:1 (Fig. 2), Innere Kraftausgangswelle 5, dessen linkes Ende (Fig. 1) in das Differentialgehäuse 6 hineinreicht, während an rechten Ende ein alternativer Kraftausgang vorgesehen ist.

Vordere, aus dem Differentialgehäuse 6 austretender Kraftausgangswelle 7 zur Übertragung des Antriebs auf die Vorderradachse,

Schiebehülse 8 auf der Welle 7, durch deren Verschiebung die vordere Ausgangswelle 7 fest mit dem Differentialgehäuse 6 verbunden werden kann.

Im Normalbetrieb erfolgt die Übertragung der Antriebskraft zu 100 % auf die Hinterradachse. Falls die Hinterräder an Bodenhaftung verlieren, dann erfolgt bei freier Stellung der Schiebehülse 8 selbsttätig über das Differentialgetriebe 6 eine Übertragung von ca. 20 % der Antriebskraft auf die vordere Kraftausgangswelle 7. Falls dieser Teilkraftantrieb der Vorderräder nicht ausreicht, dann kann durch Verschiebung der Hülse 8 die Ausgangswelle 7 in feste Verbindung mit dem Differentialgehäuse 6 gebracht werden, sodass das Differential ausgeschaltet ist und nun die Antriebskraft zu gleichen Teilen auf die hintere 3 und vordere 7 Ausgangswelle übertragen wird.

Das Differentialgetriebe 6 enthält vier Satellitenräder und hat ein dicht verschlossenes Stahlgehäuse, in welches ein dauernd plastisch verformbare chemische Verbindung eingespritzt wird. Die Eigenschaften dieser Verbindung (es handelt sich um eine im Handel erhältliche Poliester-Uretan-Verbindung) bleiben zeitlich unbeschränkt gleichbleibend. Diese Produkt bewirkt eine weiche und gleichbleibende Bremswirkung auf die internen Komponenten des Diffrentials aus, sodass je nach Betriebsbedigung des Fahrzeuges selbsstätig eine Kraftübertragung von 18-22 % von der Zwischenwelle 4, über das Differential 6, auf die vordere Ausgangswelle 7 erfolgt.

Die automatische Verlegung eines Teils (ca 20%) der Antriebskraft auf die vordere Ausgangswelle erfolgt weich und geräuschlos. Die Vorrichtung unterliegt keinerlei Abnutzung, da sie keine Reibkupplungen enthält.

Durch Verschiebung der Hülse 8 kann eine feste Verbindung zwischen dem Differentialgehäuse 6 und der vorderen Ausgangswelle 7 hergestellt werden, sodass die gesamte Antriebskraft zu gleichen Teilen auf die Hinter-und Vorderräder übertragen wird.

Der Erfindungsgegenstand zeichnet sich, im Vergleich mit bekannten Getrieben für 4-Rad-Antrieb, durch bauliche Einfachheit und geringere Anzahl von Komponenten aus. Die weiche und geräuschlose selbsttätig Verlegung eines Teils der Antriebskraft auf die Vorderräder mittels des mit dauernd plastisch verformbare Material gefüllte Differentials ist ein besonderer Vorteil. Ebenso ist die selbsttätige 100 %ige Übertragung der Antriebskraft auf die Hinterräder, bei voller Bodenhaftung der Hinterräder vorteilhaft.

Ansprüche

1) Untersetzer-Verteilergetriebe für 4-Rad-Antrieb von Kraftfahrzeugen, mit Krafteingangswelle (1), hinterer Kraftausgangswelle (3), Zwischenwelle (4), innere hinterer Kraftausgangswelle (5), und vorderer Kraftausgangswelle (7), dadurch gekennzeichnet, dass zwischen der inneren hinteren Kraftausgangswelle (5) und der vorderen Kraftausgangswelle (7) ein Differentialgetriebe (6) mit geschlossenen und mit dauernd plastisch verformbaren Material gefülltem Gehäuse angeordnet ist.

2) Getriebe nach Anspruch 1, dadurch gekennzeichnet, dass das Differentialgehäuse mit einer eine Bremswirkung auf das Differential ausübende Masse gefüllt ist, sodass bei nachlassender Bodenhaftung der Hinterräder ein Teil der Antriebskraft (ca. 20%) über das Differential selbsstätig auf die vordere Kraftausgangswelle (7) übetragen wird.

3) Getriebe nach den Ansprüchen 1 und 2, dadurch gekennzeichnet, dass die bremswirkende Masse im Differential (6) eine im Handel erhältliche Poliester-Uretan-Verbindung ist.

4) Getriebe nach dem Ansprüchen 1-3, dadurch gekennzeichnet, dass hinter dem Differential (6) auf der vorderen Kraftausgangswelle (7) eine Schiebehülse (8) angeordnet ist.mittels deren Verschiebung die genannte Welle (7) fest mit dem Differentialgehäuse verbunden werden kann, sodass die Kraftübertragung zu gleichen Teilen auf die hintere und vordere Kraftausgangswelle erfolgt.

Fig. 1

Krafteingang

100%

Hinterer
Kraftausgang

Vorderer
Kraftausgang

Alternativer
Ktaftausgang

Dicht verschlossenes Differential

Schiebehuelse

Fig. 2

Fig. 3

Vorderer Kraftausgang

Schiebehuelse

Dicht verschlossenes Differential

Alternativer Kraftausgang

Krafteingang

Hinterer Kraftausgang

100%